# EUROPEAN PATENT APPLICATION

(11) **EP 1 587 278 A2**
(43) Date of publication of application: **19.10.2005**
(21) Application number: 05252378.4
(22) Date of filing: 15.04.2005
(51) Int. Cl.: H04L 29/06

(54) **Method and apparatus for a loosely coupled, scalable distributed multimedia streaming system**

(30) Priority: 16.04.2004 US 826520
(71) Applicant: UTStarcom, Inc., Alameda, CA 94502 (US)
(72) Inventor: Li,Qiang, Campbell, CA 95008 (US); Ding,Niu, Santa Clara, CA 95050 (US); Zhang,Greg, Cupertino, CA 95014 (US)
(74) Representative: Freeman, Jacqueline Carol

(57) **Abstract**

A scalable distributed multimedia streaming system employs at least one media station having a media director and a plurality of media engines. Each media engine incorporates media content storage, communications channels for retrieving and streaming media content over a network. The media director has a controller adapted for directing retrieval over the network of media content by a selected media engine, tracking content stored on the media engines and redirecting a content request from a media console connected to the one media station over the network to a selected one of the media engines storing content corresponding to the request for streaming. Multiple media stations are employed to expand the network using a media location registry as a central repository for storing the location of all media content in the media stations. Intercommunication between the media stations for transfer of content is accomplished through the network.

## Description

### FIELD OF THE INVENTION

This invention relates generally to the field of distributed multimedia streaming and more particularly to media content distribution for high bit rate streaming from distributed components

### BACKGROUND OF THE INVENTION

High bit rate multimedia streaming, particularly high bit rate video streaming has evolved from handling thousands of simultaneous subscriber to millions of subscribers. The conventional system architecture based on a single powerful machine or a cluster system with central control can no longer meet the massive demands.

### SUMMARY OF THE INVENTION

A scalable distributed multimedia streaming system employs at least one media station having a media director and a plurality of media engines. Each media engine may incorporate media content storage, and/or communications channels for retrieving media content over the network and/or communications channels for streaming media content over the network. The media director may have a controller adapted for directing retrieval over the network of media content by a selected media engine, and/or tracking content stored on the media engines and redirecting a content requested from a media console connected to the media station to a selected one of the media engines storing content corresponding to the request for streaming. Multiple media stations may be employed to expand the network using a media location registry communicating with the media director in each media station. The media location registry may be a central repository for storing the location of all media content in the media stations. Downloaded content can then be presented by the media stations to the media consoles connected to them through a network and intercommunication between the media stations for transfer of content can also be accomplished through the network.

### BRIEF DESCRIPTION OF THE DRAWINGS

These and other features and advantages of the present invention will be better understood by reference to the following detailed description when considered in connection with the accompanying drawings wherein:
FIG. 1 is a block diagram of the elements incorporated in a media station;
FIG. 2 is a block diagram of a network system employing media stations according to the present invention;
FIG. 3a is a diagram of the hardware interaction and process for streaming data to a subscriber's media console;
FIG. 3b is a flow diagram of the process for streaming data as shown in FIG. 5a;
FIG. 4 is a flow diagram of the process for rapid replication of segments on alternative media engines to relieve overload;
FIG. 5 is a flow diagram of the process for media engine swapping for avoiding errors in response to subscriber commands;
FIG. 6 HMFS;
FIG. 7 is a top level block diagram of the hardware physical structure;
FIG. 8 is a detailed block diagram of the chassis arrangement;
FIG. 9 is a block diagram of the functional interaction of the blade main board with the Network Management System and the chassis blade controller;
FIG. 10 is a block diagram of the basic elements of the secret key system for access control in a system employing the invention; and
FIG. 11 is a block diagram of the system communication for authentication of a media console request for streaming data.
FIG. 12 is a flow diagram demonstrating the authentication process.

### DETAILED DESCRIPTION OF THE INVENTION

A media content distribution system incorporating the present invention employs a self-sufficient streaming unit designated a media station covering a set of subscribers. Media stations in a typical application are installed in a CO of a broadband network to which the subscribers are connected. The placement of media stations is determined according to the number of subscribers to be covered, network topology and available bandwidth of the network.

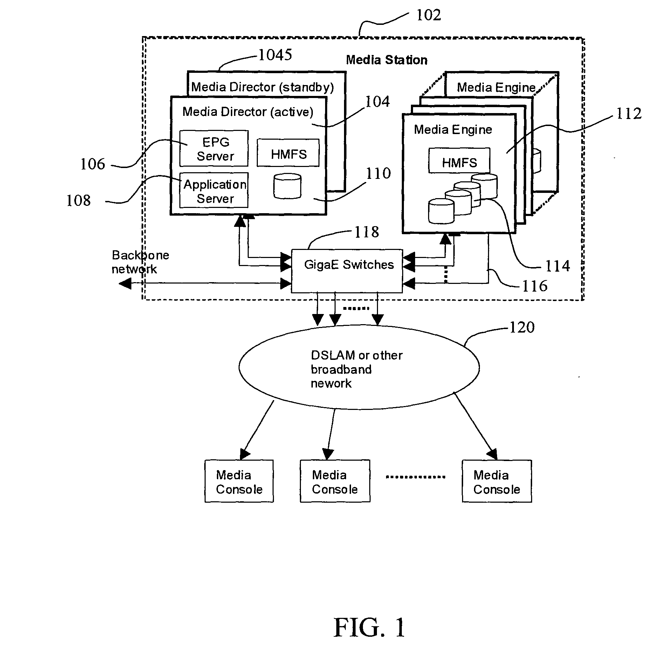

As shown in FIG. 1 for an exemplary embodiment, each media station 102 incorporates a media director 104 having an EPG server 106 and an application server 108 for handling streaming and trick-mode requests from the subscriber. A Hyper Media File System (HMFS) 110 is incorporated for data storage. A standby media director 104S with identical capabilities is provided to assume the role of the active director upon failure or removal from service. Multiple media engines 112 are present in the media station. The media director records the location of all programs in the system and which media engine holds a particular program or portions of it. Upon communication from a subscriber media console, the media director directs the media console to the appropriate media engine to begin the data stream. A distributed storage subsystem (for the embodiment shown, a HMFS) 114 is present in each media engine to employ a large number of independent, parallel, I/O channels 116 to meet massive storage size demands and I/O data rate demands. Media engines are connected together through a set of Gigabit Ethernet switch 118, and to the network 120 communicating with the subscribers. Matching bandwidth between the network to subscribers and I/O channels avoids any bottleneck in the streaming system.

Each media program (a movie, a documentary, a TV program, a music clip, etc.) is partitioned into smaller segments. Such partitioning provides a small granularity for media data units and makes data movement, replications, staging and management much easier and more efficient.

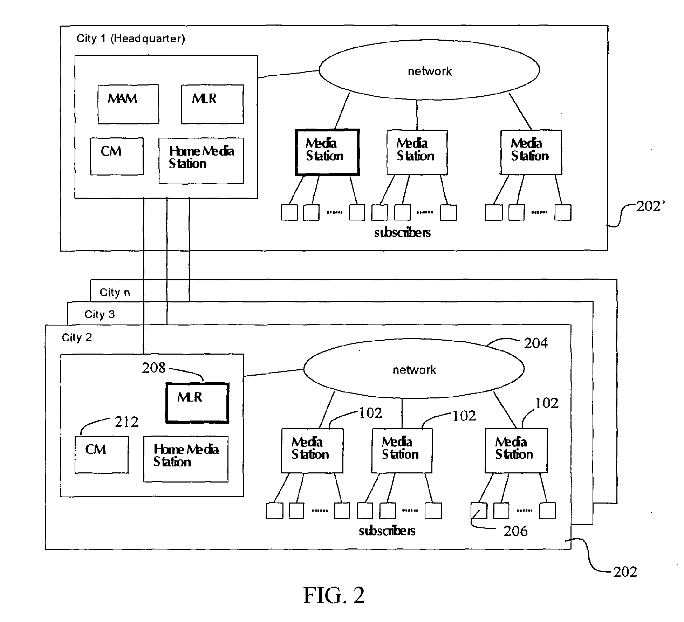

FIG. 2 demonstrates one embodiment of a network system designated a Media Switch with incorporates groups of media stations configured for use in a number of geographical areas or cities 202 served. A complete description of the Media Switch is disclosed in companion application Attorney Docket No. U001 100084 entitled METHOD AND APPARATUS FOR MEDIA CONTENT DISTRIBUTION IN A DISTRIBUTED MULTIMEDIA STREAMING SYSTEM having a common assignee with the current application, the contents of which are fully incorporated herein by reference. The scalability of the system employing the present invention is demonstrated in FIG. 2. Each city employs a series of media stations 102 interconnected through the metropolitan area network (MAN) 204. Each media station serves a number of subscribers having media consoles 206. Each subscriber has a primary media station to serve its streaming requests. Additionally, each city incorporates on-line support layer elements including a media location registry (MLR) 208, a home media station 210 and a content manager 212 in a data center (DC) 214. For the embodiment shown, a principal city 202' is chosen as a headquarters site. Associated with that site is a Media Asset Management (MAM) system 124. In alternative embodiments, multiple cities incorporate a MAM for introduction of content into the system.

The MAM determines when and where to distribute a program. The CM publishes the program at the time specified by the MAM and the MLR identifies the location of the data for distribution

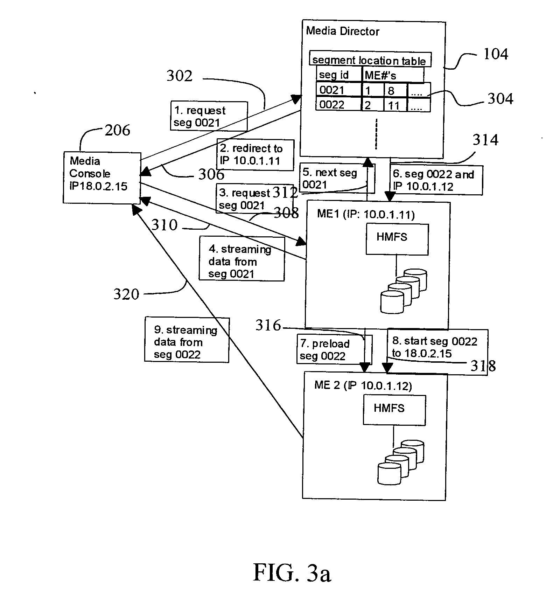

For streaming content to subscribers, the media director in each of the media stations employs a load balancing scheme to keep track of the task load of the media engines in the media station. Load balance is achieved by directing streaming requests according to current system states and load distribution. An example of the communications sequence for data transfer under the command of the media director is shown in FIG. 3a with representative IP address locations for the system elements. The media console 206 requests 302 a segment 0021 from the media director 104. The media director identifies the location of the segment in a segment location table 304 as present in media engines 1 and 8, (ME1 and ME8) and redirects 306 the MC to ME1's IP address 10.01.1.11. The MC then requests 308 segment 0021 from ME 1 which begins streaming data 310. When the segment being streamed nears its end, ME1 requests 312 the location of the next segment from the MD which locates the next segment and MEs storing that segment in the segment location table, selects an ME based on load and status and replies 314 with the identification of the next segment (seg 0022) and the IP address 10.0.1.12 of ME2 where the next segment resides. ME1 notifies ME2 to preload 316 the next segment seg 0022 and upon completion of the streaming of seg 0021 directs 318 ME2 to start streaming seg 0022 to IP address 18.0.2.15, the media console. ME2 then begins streaming 320 the data from seg 0022 to the MC.

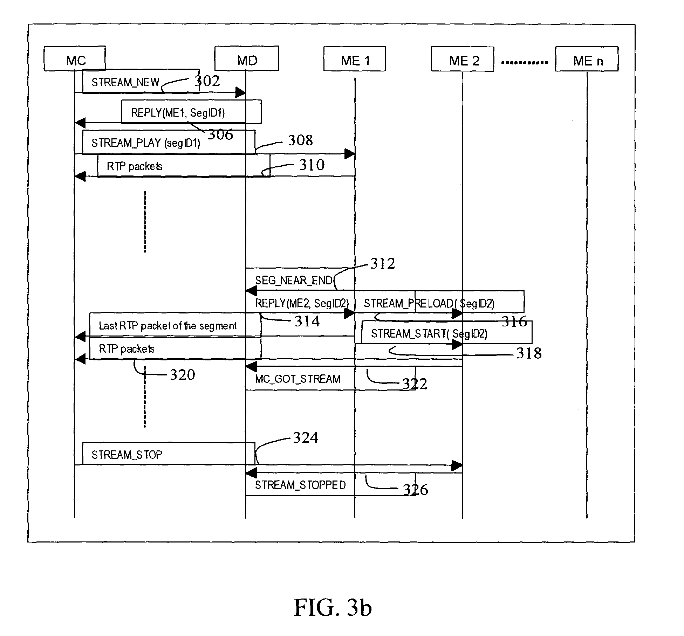

A flow diagram of the sequence described with respect to FIG. 3a is shown in FIG. 3b. Upon assumption of the communication of the stream with the MC by ME2, ME2 sends a notification 322 to the MD. The process described continues until the MC orders a cessation of streaming 324 by the ME at which time the ME notifies the MD the streaming has stopped 326. The media director may employ a number of MEs to supply the segments in sequence to the media console. Flexibility in assignment of ME based on content and load allows the MD to balance the operation of the MEs.

As a portion of the load balancing scheme, a rapid replication scheme is used to copy a segment from one media engine to another. When a media engine exceeds its capacity of streaming, a highly demanded segment can be replicated to another media engine and further requests for that segment are directed to the new media engine. The extra delay observed by the streaming request that triggered the replication is less than 30 milliseconds in exemplary embodiments.

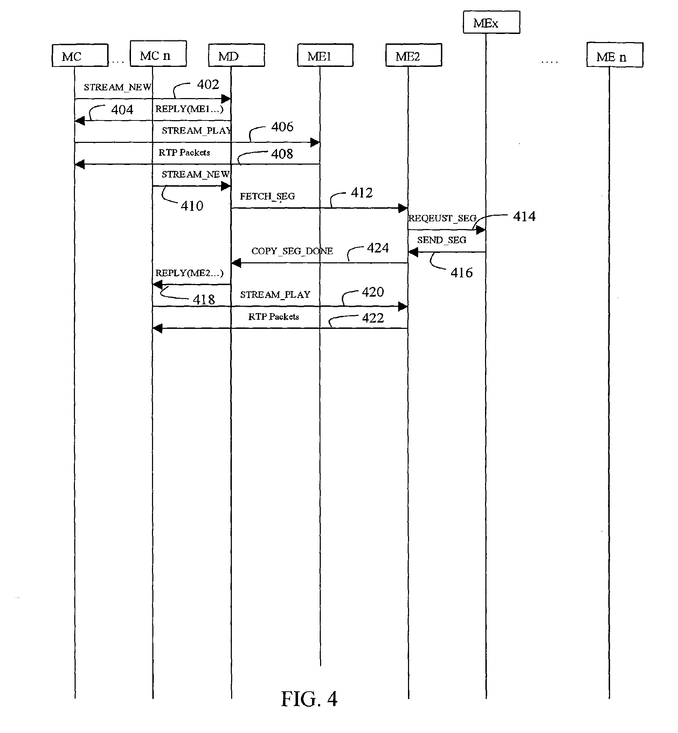

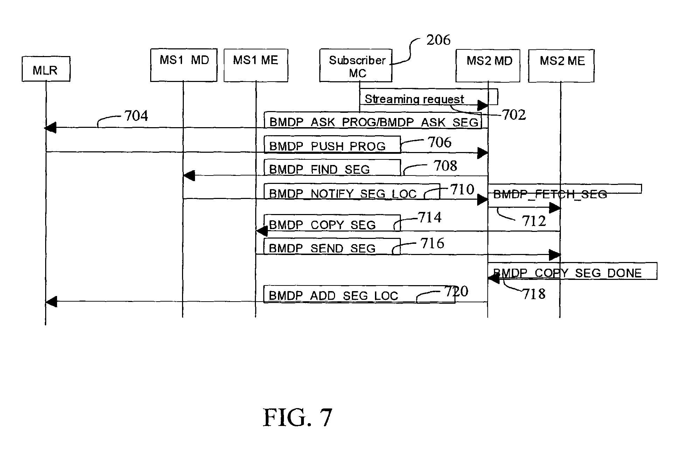

The communications sequence is shown in FIG. 4. A first media console MC1 requests streaming 402 of a segment to the Media director MD. The MD replies 404 with a redirection to a media engine ME1 storing the segment. MC1 requests playing of the stream 406 from ME1 and ME1 responds 408 by streaming the RTP packets of data from the segment. The MD has cataloged the redirection to ME1 and monitors ME1's load. If ME1 has reached a predetermined maximum threshold (some percentage of the maximum capacity), when another media console MEn requests streaming 410 of the same segment, if the segment is not present on another available ME in the segment location table, the MD directs 412 another media engine ME2 to fetch the segment and specifies the ME from which the segment is to be replicated. In various embodiments the maximum threshold may be determined such that the replication can occur from the first media engine or other existing media engines in the segment location table. Alternatively, the fetch command may direct copying of the segment from a media engine in another media station as described with respect to FIG. 7. For purposes of the example, the source media engine defined by the MD is designated MEx. ME2 requests a copy 414 of the segment from MEx which replies by sending the segment 416. Upon direction of the fetch, the MD replies 418 to MCn redirecting to the IP address of ME2. MCn then requests playing of the stream 420 and ME2 responds 422 forwarding RTP packets for the segment to MCn. When copying of the segment from MEx to ME2 is complete, ME2 sends a copy done 424 to the MD which notifies the MLR of the new location for the segment as previously described.

A stream swapping method is used to exchange two streams of the same segment, one on a first media engine ME2 that has a complete copy of the segment and a second on a second media engine ME1 which is currently receiving the same segment. Where the subscriber attempts a fast-forward while streaming from ME1 with the incomplete segment, the media director swaps the fast-forwarding stream from ME1 to ME2 (with the complete segment). The stream using the same segment running at normal rate is swapped from the first media engine to the second media engine thereby avoiding a failure of the fast forwarding operation.

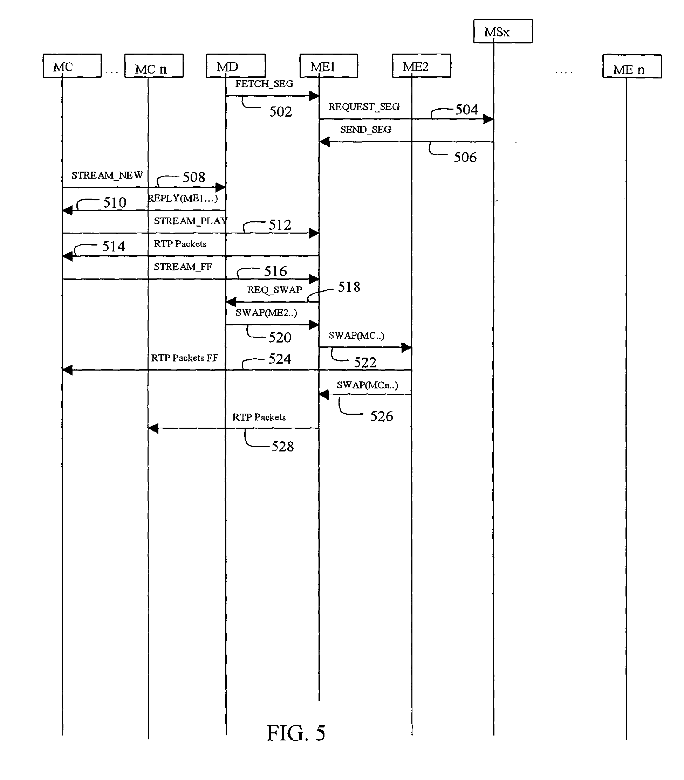

FIG. 5 demonstrates the communications sequence for swapping media engines. During normal operation, the media director MD has directed ME1 to fetch 502 a particular segment. ME1 requests a copy 504 of the segment from the source ME (arbitrarily identified as MEx) and MEx responds by sending 506 the desired segment. During receipt of the segment, a media console MC1 requests a stream 508 from the MD which replies 510 redirecting the MC to ME1. MC1 requests playing of the stream 512 and ME1 responds 514 by sending the RTP packets from the requested segment. If MC1 requests a fast forward 516 of the stream (segment) ME1 identifies the potential for a streaming error if the fast forward exceeds the portion of the segment which has been received from MEx. ME1 notifies 518 the MD of the impending error state and the MD replies with the identification of a media engine ME2 (which can be MEx itself) having the entire segment that is idle or has started streaming after ME1. ME2 has been streaming RTP packets 520 of the segment to another media console MCn. ME1 requests a swap 522 identifying MC1 as the media console in current communication and providing the segment number and frame within the segment. ME 2 begins streaming of data 524 from the segment to MC and, if ME2 has been streaming, returns a swap 526 identifying media console MCn and the frame of the segment. ME1 takes over streaming of RTP packets 528 to MCn.

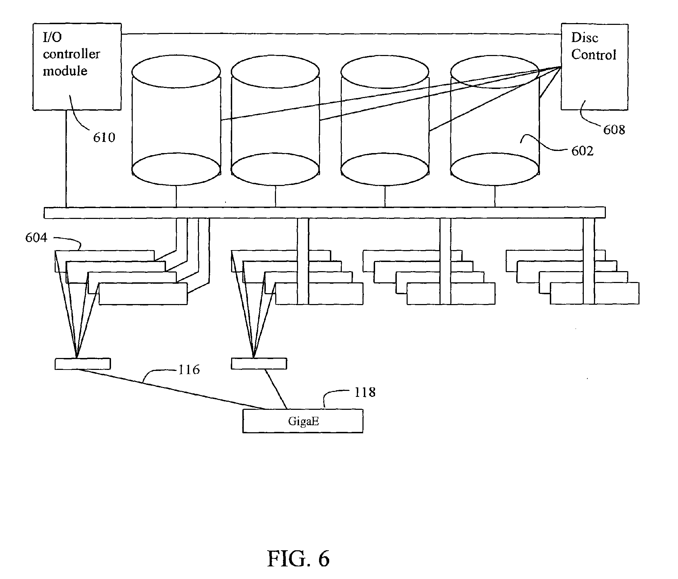

The media engines in the media station are symmetrical with respect to input and output thereby allowing data to be taken into the media engine substantially as rapidly as streaming data is sent out. As shown in FIG. 6, each media engine employs an HMFS have multiple storage drives 602. A content program, e.g. a movie, is divided into a sequence of segments. Each segment represents several minutes of contents, 4 minutes for example. In each media station, a segment is stored in at least two media engines, for fault tolerance. The media director in each media station has the database containing the locations of each segment held by that media station, which is the top level directory of HMFS. For each segment, the directory entry contains the information such as, data size, frame count, frame index, key frame (or I frame) index, inter-frame time interval, media type (MPEG2, MPEG4, WM9, H.264, etc.), time of recording, pointers to disk blocks holding the data of the segment.

Data in a segment is partitioned into "datalet", which is the minimum disk I/O unit and buffer allocation unit. For each outgoing stream (stream that is being sent to an MC), a number of buffers 604 connected to a bus 606 from the drive units are used to pre-fetch datalets for the stream. Datalets are distributed to the disk drives in a media engine (for the embodiment shown in FIG. 6 four drives), so when large number of streams are active on the media engine, all four drives, and associated I/O channels are working in parallel to achieve maximum possible I/O throughput through the buffers to the Gigabit Ethernet switches.

The I/O operations on each disk are optimized by performing the operations in the sequence of their disk addresses so the seek time is minimized. A disk controller 608 operating in concert with an I/O controller module 610 provides sequencing control.

The network interfaces of the media engines are full-duplex Gigabit Ethemet, which provide up to gigabit/second bandwidth in either direction, incoming into a media engine or output from a media engine. The incoming data is buffered in the same fashion as the output data, and the incoming data is written to the disk in the same pattern as the data is read from disk.

Therefore, the media station can be used as a high bit rate, massive storage repository. This architecture is specifically beneficial in live broadcast transmission where the program segments are transferred to the media stations in real time and streamed to the media consoles.

For content which is not yet present, or not complete, on the media stations but available on the system, a request from a subscriber results in transfer of the content as shown in FIG. 7. The subscriber media console 206 makes a streaming request 702 to the media director MS2 MD of the media station MS2. The MD asks 704 the MLR for the location of the program or segment requested. The MLR responds with a notification 706 of locations for the segment. Multiple locations may exist where the desired segment is stored. The MD calculates the relative cost of obtaining the desired copy of the segment based on a number of parameters including the bandwidth available, distance from the source media station, copying time and load of the source media station. Upon selection of a source media station, MS1 for the example herein, the MD requests 708 the location of the segment from MS1MD which responds 710 with the address of a media engine MS1ME storing the segment. MS2MD then directs 712 a selected media engine MS2ME to fetch the segment. MS2ME requests 714 a copy of the segment from source media engine MS1ME which responds 716 sending the segment. Upon completion of the copying of the segment, MS2ME notifies 718 the MD of completion of the copy and the MD notifies 720 the MLR of the new location of the segment.

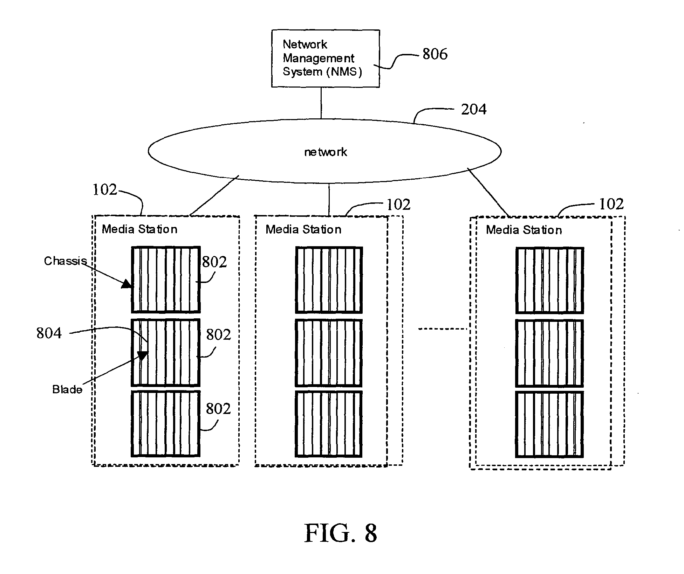

From a hardware standpoint in a representative embodiment, the Media Station comprises one or more chassis each having multiple individual blades as shown in FIG. 8. The Media Station (MS) 102, a self-contained streaming unit typically located in a CO and covering the vicinity of the CO. Each MS consists of a number of chassis 802. The chassis management system provides external control for the blades in the chassis. Contained within each chassis are blades 804 is the lowest level management unit. Each blade is an independent computer. It can be either a Media Engine (ME) or a Media Director (MD).

In the embodiment shown, the Media Station is a level of abstraction, with its state represented by its MD. Therefore, the MS need not be an entity in the management structure of a network management system (NMS) 806 employed for hardware control.

Network management is a first level of management for the media station(s) and provides a full set of management functionalities and GUI. System load and other operational parameters such as temperature and fan speed are monitored. Automatic alarms can be configured to send email or call to the system operator.

Chassis management is the second level and provides blade presence detection, automatic blade power up, remote blade power up and power down, managed blade power up to avoid current surge during disk drive spin up, chassis id reading and chassis control fail-over.

Blade self-management and monitoring is the third level and allows temperature, fan speed, and power supply voltage monitoring and alarm through SNMP to the NMS, self-health monitoring including critical threads monitoring, storage level monitoring, load monitoring, etc. All alarm thresholds can be set remotely by NMS. For software related failures, software restart or OS reboot will be attempted automatically, and the event will be reported to NMS

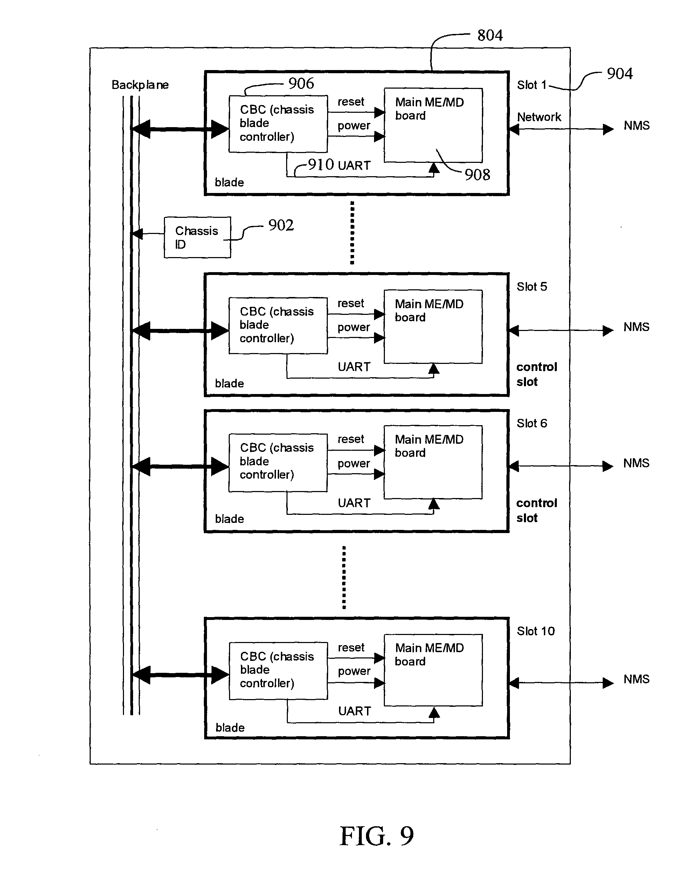

As shown in FIG. 9 for the exemplary embodiment, a chassis can host up to 10 blades 804, each can be a Media Engine or a Media Director. Each blade can read the chassis ID 902 and its own slot number 904 for identification.

All blades in a chassis are equipped with a control unit or Chassis Blade Controller (CBC) 906. For the exemplary embodiment, each CBC consists of an Intel 8501 chip implementing the control logic and an FPGA configured to act as the control target. The 8501 chip also communicates with the main board 908 through a UART interface 910. The main board can issue control commands or relay control commands received from NMS through the network to the CBC.

For the exemplary embodiment, blades located in slot 5 and 6 are the control blades. One active and one standby determined by the arbitration logic at power up. When the chassis is being powered up, the blades in slots 5 and slot 6 arbitrate and one becomes the active controller or media director. The CBC on the active control blade scans the back-plane and powers up the blades in a controlled sequence with a predetermined interval to avoid current surge caused by disk drive spin up on the individual blades.

The CBC on the active control blade then scans all slots on the backplane and detects the presence and status of each blade. The standby control blade monitors the status of the active control blade. When the active control blade gives up the control, the standby automatically takes over and become the active control blade.

During normal operation, the CBC on the active control blade periodically scans the backplane. If a new blade is plugged in, it will be automatically powered up.

The active control blade register itself with NMS, and can take commands from NMS for controlling other blades in the chassis, such as checking their presence and status, power up/down or power cycle a blade, etc. The non-controlling blades also register themselves to NMS and can take commands from NMS to reboot or power down.

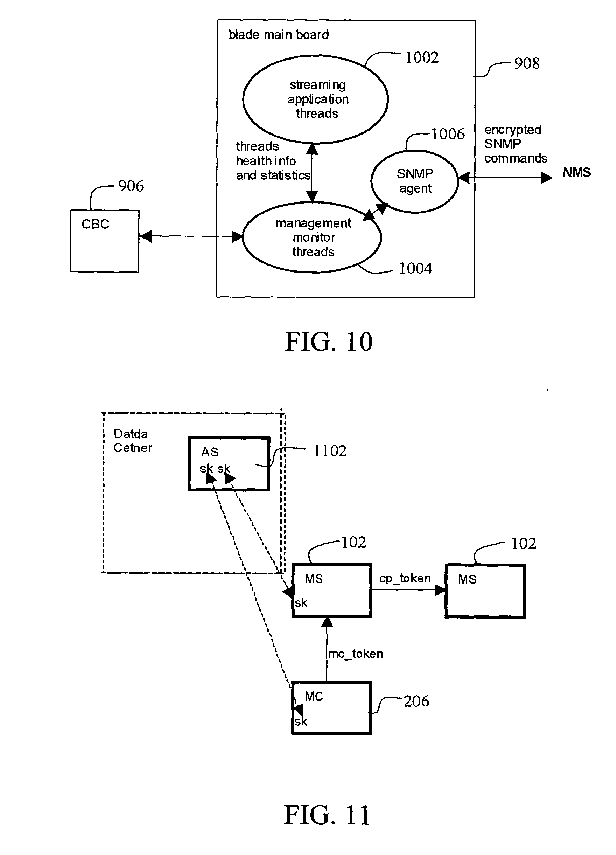

From the management point of view, each blade is a standalone computer. Besides its application functionalities, each blade has management software to monitor the health of the application software, system load and performance, as well as hardware related parameters such as CPU temperature, fan speed, and power supply voltage. The blade management software functionality is shown in FIG. 10.

The streaming application threads 1002 put their health and load information into a shared memory area periodically. The management monitor thread 1004 scans the area to analyze the status of the threads and the system. In addition to periodically reporting the state information to NMS through a SNMP agent 1006, appropriate actions as known in the art are taken when an abnormal state is detected.

As previously described, a service token based authentication scheme is employed as the precursor for any data transfer requested by a subscriber's media console. FIG. 11 shows the access control schemes, where "sk" indicates a secrete key. Secret keys are established only between a system component, such as the media console 206 or the media station 102, and Authentication Server 1102. All other accesses among the system components are controlled by Kerberose style tokens granted by the Authentication Server. This reduces the number of secret keys distributed among the components, and makes adding new components simpler. An mc_token 1104 is passed by the media console to the media station to obtain streaming services. A cp_token 1106 is passed by a media station for data transfer between media stations.

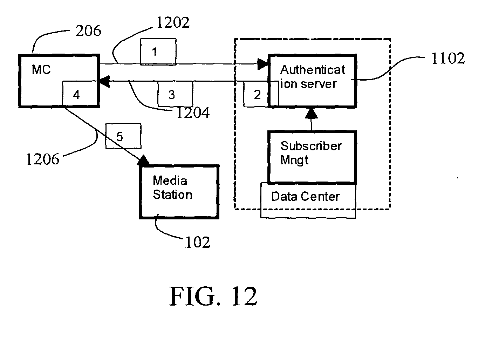

A media console possesses two numbers, MC_ID and MC_Key. Those numbers can be burned into a chip in the box, be on a Smartcard, or be on any form of non-volatile memory in the box. When a subscriber signs up for the service, the Subscriber Management system records the numbers and associates them with the user account. MC_ID and MC_Key will be subsequently passed to the Authentication Server. FIG. 12 depicts the process of authentication.

A media console 206 when it powers up, after obtaining IP, sends an authentication request 1202 [which for the embodiment disclosed comprises MC_ID, {MC_ID, MC_IP, Other info, salt, checksum} _MC_Key] to the Authentication Server 1102. Note: {*x*}_*k* denotes that the message x is encrypted by *k.*

The Authentication Server finds the record of the media console using MC_ID, decrypts the message, and generates a session key, MC_SK, and an access_token for the media console. For an exemplary embodiment access_token = {MC_SK, service code, timestamp, checksum}_MS_SK, where MS _SK is a secret key established previously between the authentication servier and the media station that serves the media console; "service code" indicates what services the token can be used for. The Authentication Server calculates the "seed key" for MC_SK. The Authentication Server replies 1204 to the media console with [{access_token, MS_IP, salt, checksum}_MC_Key]. The MC decrypts the message with MC_Key and obtains mc_token and the IP address of the Media Director that it should contact. The mc_token will be kept until the media console shuts down, or the Authentication Server sends a new one. The media console sends 1206 mc_token to the application Server in the media station when requesting a media program, or the EPG server for browsing the EPG.

The implementation of the access tokens and encryption of the content provided over the system in an exemplary embodiment employs SecureMedia's Encryptonite System for secure content delivery and access right control.

Having now described the invention in detail as required by the patent statutes, those skilled in the art will recognize modifications and substitutions to the specific embodiments disclosed herein.

## Claims

1. A scalable distributed multimedia streaming system comprising:
at least one media station having a media director and a plurality of media engines, each media engine having
means for storing media content,
means for retrieving media content over the network and
means for streaming media content over the network, the media director having
means for directing retrieval over the network of media content by a selected media engine,
means for tracking content stored on the media engines and
means for redirecting a content request from a media console connected to the at least one media station to a selected one of the media engines storing content corresponding to the request for streaming;
a media location registry communicating with the media director in each media station, the media location registry storing the location of all media content in the media stations, and
means for downloading content to be presented.

2. A scalable distributed multimedia streaming system as defined in claim 1 wherein the means for downloading content comprises:
a content manager for providing program information to the media stations;
a content engine for downloading content from selected providers; and
a home media station for storing all content downloaded by the content engine.

3. A scalable distributed multimedia streaming system as defined in claim 1 or 2 wherein the means for storing content incorporates multiple independent I/O channels for simultaneous input and output.

4. A scalable distributed multimedia streaming system as defined in any one of claims 1 to 3 further comprising an authentication server communicating through the network for distribution of tokens to the media console.

5. A scalable distributed multimedia streaming system as defined in any one of claims 1 to 3wherein the media station comprises a chassis having a plurality of blades, a first blade functioning as the media director and a plurality of blades functioning as media engines.

6. A scalable distributed multimedia streaming system as defined in claim 5 wherein each blade has direct communication with a network through a communications agent and the system further comprises a network management system for all components in the system.

7. A scalable distributed multimedia streaming system as defined in claim 5 wherein each blade includes a chassis blade controller for communication through the chassis backplane in the media station and a main board for media engine and media director functions.

8. A scalable distributed multimedia streaming system as defined in any one of claims 2 to 7 further comprising a plurality of media stations.

9. A method for scalable distributed multimedia streaming comprising the steps of:
providing a communications network;
connecting at least one media station to the network having a media director and a plurality of media engines;
providing g a media location registry;
downloading content to be presented;
communicating from the media location registry to a media director in each media station the content to be distributed;
directing through media director in the media station independent retrieval over the network of media content by at least one selected media engine;
storing the media content on the selected media engine;
tracking content stored on the media engines in the media director;
storing the location of all media content in the media station in the media location registry;
redirecting a content request from a media console connected to the media station through the network to a selected one of the media engines storing content corresponding to the request for streaming;
streaming media content over the network from the selected media engine to the media console.

10. A method as defined in claim 9 employing a plurality of media stations wherein the step of downloading content comprises the steps of:
transferring metadata of a program to a content manager;
instructing a content engine to transfer the program data into a Home Media Station;
updating the state of the program to "inactive" and specifying a publish time to the content manager;
sending distribution parameters to the media location register;
distributing the program;
sending a "publish" command to the media station at the publish time to start the service of the program.

11. A method as defined in claim 10 wherein distributing the program comprises the steps of:
directing the media director in a seeking media station to obtain the program including identifying a source media station where the content is present;
requesting from the media director of the source media station the location of the needed segment;
notifying the seeking media director of the location of the segment in selected media engine;
directing by the seeking media director a receiving media engine in the seeking media station to fetch the segment from the selected media engine;
requesting a copy of the segment from the selected media engine;
transferring the segment from the selected media engine to the receiving media engine;
notifying the seeking media director that the copying of the segment is complete; and,
notifying the media location register of the new location of the segment for addition to the location database.

12. A method as defined in claim 11 wherein the source media station is the home media station.

13. A method as defined in any one of claims 10 to 12 wherein content requested by the media console is not present on the media station and comprising the steps of:
receiving a streaming request through the media director;
querying the media location registry for the location of the program or segment requested;
responding from the media location registry with locations for the segment;
selecting a source media station by the media director;
requesting the location of the segment from a media director in the source media station;
responding with the address of a source media engine having the segment;
directing a selected target media engine to fetch the segment;
requesting by target media engine a copy of the segment from source media engine;
sending the segment to the target media engine;
notifying the media director of completion of the copy and
notifying the media location register of the new location of the segment.

14. A method as defined in claim 13 wherein the step of selecting a source media station further comprises the steps of:
identifying multiple locations may exist where the desired segment is stored;
calculating the relative cost of obtaining the desired copy of the segment based on a number of parameters including the bandwidth available, distance from the source media station, copying time and load of the source media station.

15. A method as defined in any one of claims 9 to 14 wherein the steps of redirecting a content request and streaming media content comprise the steps of:
receiving a request for a first segment by the media director from the media console;
identifying the location of the first segment in a segment location table;
redirecting the media console to the IP address of a first media engine;
requesting the first segment from the first media engine;
streaming data from the first media engine;
detecting the segment being streamed as near its end;
requesting the location of the next segment from the Media director;
locating the next segment in the segment location table;
replying with the identification of the next segment and the IP address of a second media engine where the next segment resides;
notifying the second media engine to preload the next segment;
upon completion of the streaming of the first segment, directing the second media engine to start streaming the next segment to the IP address of the media console;
streaming the data of the next segment from the second media engine to the media console;
upon assumption of the communication of the stream with the Media console by the second media station, notifying the media director.

16. A method as defined in claim 15 wherein the steps of detecting the segment being near its end through notifying the media director are repeated until the media console orders a cessation of streaming by the media engine at which time the media engine notifies the media director that the streaming has stopped.

17. A method as defined in claim 15 or 16 wherein the segment location table identifies a plurality of media engines in which the segment is stored and in which the step of identifying the location includes the step of selecting a media engine based on load and status.

18. A method as defined in claim 15, 16 or 17 wherein the first media engine has reached a predetermined maximum capacity when a second media console requests streaming of the same segment further comprising the steps of:
directing a third media engine to fetch the segment, specifying a fourth media engine from which the segment is to be replicated;
requesting a copy by the third media engine of the segment from the fourth media engine;
sending the segment from the fourth media engine;.
replying to the second media console redirecting to the IP address of the third media engine;
requesting by the second media console of playing of the stream; and,
responding by the third media engine forwarding data for the segment to the second media console.

19. A method as defined in claim 18 further comprising the steps of:
sending a copy done from the third media engine to the MD when copying of the segment from the fourth media engine to the second media engine is complete; and,
notifying the MLR of the new location for the segment.

20. A method as defined in any one of claims 15 to 19 wherein the media director has directed the first media engine to fetch the first segment and wherein the step of redirecting occurs during receipt of the segment and the step of streaming data from the first media engine further comprising the steps of:
receiving a fast forward request of the stream from the media console;
identifying the potential for a streaming error if the fast forward exceeds the portion of the segment which has been received by the media engine;
notifying the media director of the impending error state;
replying to the media engine with the identification of a third media engine having the entire segment;
requesting of the third media engine a swap identifying the media console in current communication; and,
streaming of data by the third media engine from the segment to media console.

21. A method as defined in claim 20 wherein the third media engine has also been streaming further comprising the steps of;
returning from the third media engine a swap identifying a second media console in communication; and,
streaming of data by the first media engine to the second media console.

22. A method as defined in any one of claims 9 to 21 further comprising prior to the step of redirecting the steps of:
requesting by the media console of a security token from a security authentication server on the network;
confirmation of subscriber authentication for the media console; and,
issuing the security token based on the subscriber authentication; and the step of redirecting further includes the steps of:
receiving the security token from the media console;
confirming the security token with respect to the streaming request.

23. A method as defined in any one of claims 11 to 22 further comprising the steps of:
authenticating each media engine by an authentication server;
supplying a second security token to each authenticated media engine; and wherein the step of requesting a copy of the segment includes
receiving the second security token from the receiving media engine.

24. A method as defined in any one of claims 11 to 22 further comprising the steps of:
authenticating each media engine by an authentication server;
supplying a second security token to each authenticated media engine; and wherein the step of requesting a copy of the segment includes
receiving the second security token from the target media engine.
